Europäisches Patentamt

European Patent Office

Office européen des brevets

(19)

(11) EP 0 866 772 B1

(12) **FASCICULE DE BREVET EUROPEEN**

(45) Date de publication et mention
de la délivrance du brevet:
**24.04.2002 Bulletin 2002/17**

(51) Int Cl.[7]: **C01G 56/00**, C01G 43/01,
C01B 13/34

(21) Numéro de dépôt: **96942397.9**

(22) Date de dépôt: **12.12.1996**

(86) Numéro de dépôt international:
**PCT/FR96/01993**

(87) Numéro de publication internationale:
**WO 97/21629 (19.06.1997 Gazette 1997/26)**

(54) **PROCEDE D'OBTENTION D'UN MELANGE D'OXYDES METALLIQUES PULVERULENTS, APPARTENANT A LA FILIERE NUCLEAIRE, A PARTIR DE LEURS NITRATES**

VERFAHREN ZUR HERSTELLUNG VON PULVERIGEN METALLOXYDGEMISCHE, GEHÖREND ZU DIE NUCLEARKETTE, AUS DEREN NITRATE

METHOD FOR PREPARING A MIXTURE OF POWDERED METAL OXIDES FROM NITRATES THEREOF IN THE NUCLEAR INDUSTRY

(84) Etats contractants désignés:
**BE DE FR GB**

(30) Priorité: **12.12.1995 FR 9514883**

(43) Date de publication de la demande:
**30.09.1998 Bulletin 1998/40**

(73) Titulaire: **Comurhex S.A.**
**78144 Vélizy-Villacoublay Cédex (FR)**

(72) Inventeurs:
• **FARON, Robert**
**DECEASED (FR)**

• **SCHALL, Gilbert**
**F-11100 Narbonne (FR)**
• **DAVIED, Sylvie**
**F-11100 Narbonne (FR)**

(74) Mandataire: **Tilloy, Anne-Marie**
**IXAS Conseil,**
**15, rue Emile Zola**
**69002 Lyon (FR)**

(56) Documents cités:
**EP-A- 0 143 726      EP-A- 0 328 742**
**WO-A-89/08610      WO-A-95/34508**
**DE-A- 3 802 047      GB-A- 514 538**

EP 0 866 772 B1

**Description**

Domaine de l'invention

L'invention concerne un procédé d'obtention d'un mélange d'oxydes métalliques pulvérulents, de réactivité appropriée, appartenant à la filière nucléaire, à partir de leurs nitrates, se présentant sous la forme d'une solution aqueuse ou d'un mélange de solides naturellement pulvérulents ou rendus pulvérulents.

L'invention concerne plus particulièrement un procédé de fabrication d'un mélange d'oxydes métalliques pulvérulents à partir de leurs nitrates, mettant en oeuvre au moins deux éléments métalliques pouvant intervenir dans la formation d'un combustible nucléaire, tels que uranium, plutonium, thorium (U, Pu, Th) et autres éléments fissiles, fertiles, ou permettant des simulations, tels que le cérium (Ce).

L'invention concerne également plus particulièrement un procédé de fabrication d'un mélange d'oxydes métalliques pulvérulents à partir de leurs nitrates, mettant en oeuvre l'un au moins des éléments métalliques comme l'uranium, pris en combinaison avec un au moins des éléments des terres rares comme le Gadolinium (Gd), en vue du contrôle de la fission des combustibles à base d'oxydes frittés mixtes.

Comme matière première à traiter selon le procédé de l'invention, les éléments intervenant sous la forme de nitrates et conduisant par leur décomposition aux mélanges d'oxydes métalliques pulvérulents, peuvent avoir des origines diverses : ils peuvent avoir ou non subi une irradiation et, de ce fait, disposer d'une composition isotopique quelconque. Dans le cas particulier de l'uranium, cet élément peut être d'origine naturelle, ou peut avoir été préalablement enrichi, par exemple par diffusion gazeuse, par ultracentrifugation ou par voie laser, peut avoir été irradié, et dans ce cas, provenir du retraitement de combustibles irradiés après refroidissement et séparation du plutonium (Pu) et des produits de fission.

Aux fins de la présente invention :

- par "oxydes métalliques", il convient d'entendre un mélange d'au moins deux oxydes tels que l'oxyde d'uranium ($UO_3$), de plutonium ($PuO_2$), de thorium ($ThO_2$), de césium ($Cs_2O$), de Ruthénium ($RuO_2$), et de terres rares, tels que, par exemple, de Gadolinium ($Gd_2O_3$) et de cérium ($CeO_2$), dont les couples privilégiés sont U-Pu, U-Th, U-Cs, U-Ru, U-Gd, U-Ce.

- à travers l'expression "réactivité appropriée", la demanderesse entend définir la surface spécifique la plus adéquate qu'il est souhaitable de procurer aux oxydes métalliques pour optimiser leur aptitude à des transformations postérieures à la dénitration, telles que par exemple :

  - la transformation thermique de l'$UO_3$ en $U_3O_8$, (oxyde intermédiaire avant sa réduction ultérieure) ;

  - ou bien la réduction directe de l'$UO_3$ en $UO_2$ suivie de l'hydrofluoration par l'acide fluorhydrique ;

  - ou encore la production d'une poudre d'oxydes mixtes de qualité céramique, destinée à être transformée en combustibles nucléaires par compactage et frittage des pastilles compactées.

- sous l'appellation "nitrates métalliques", la demanderesse entend désigner le nitrate d'uranyle, en mélange avec l'un au moins des nitrates de plutonium, de thorium, de césium, de ruthénium, et de terres rares telles que, par exemple, de gadolinium, de cérium.

Dans le cas de la réduction directe de l'$UO_3$ en $UO_2$, suivie de l'hydrofluoration de l'$UO_2$ en $UF_4$, la réactivité de l'$UO_2$ est corrélativement liée à la surface spécifique de l'$UO_3$ résultant de la dénitration. Il s'avère souhaitable que les aptitudes à la réduction directe de $UO_3$ en $UO_2$ et à l'hydrofluoration de l'$UO_2$ en $UF_4$, soient réglées à la demande lors de la dénitration du nitrate d'uranyle par la production d'un oxyde d'uranium $UO_3$ ayant une surface spécifique adaptée à chaque technologie.

Dans le cas de la production de poudres d'oxydes métalliques de qualité céramique, destinées à la réalisation de combustibles nucléaires, [tels que le dioxyde d'uranium ($UO_2$) ou son mélange avec l'un au moins des oxydes de plutonium ($PuO_2$), de thorium ($ThO_2$), de césium ($Cs_2O$), de ruthénium ($RuO_2$), de gadolinium ($Gd_2O_3$) et de cérium ($CeO_2$)] il est bien connu que le frittage de telles poudres permet d'obtenir des pastilles de densité élevée, à la condition de s'adresser à des poudres de grande surface spécifique, et de pratiquer pour chaque valeur de surface spécifique, un protocole de frittage optimal (traité de chimie minérale de Paul PASCAL, tome XV, pages 300 à 304, édition 1961).

Etat de la technique

De nombreux procédés de production de mélanges d'oxydes métalliques sont connus, par précipitation ou par décomposition de leurs nitrates : ils sont généralement destinés à la préparation de combustibles nucléaires contenant de l'uranium seul (sous la forme $UO_2$), de combustibles mixtes formés de mélanges en proportions variables d'au moins deux éléments tels que l'uranium, le plutonium, le thorium ($UO_2$, $PuO_2$, $ThO_2$).

Mais ces procédés connus peuvent être également utilisés pour l'obtention d'un mélange d'oxydes métalliques pour la fabrication de barres de contrôle de la fission des combustibles nucléaires, réalisés au moyen d'oxydes frittés mixtes du type U-Gd par exemple, sous la forme $UO_2$, $Gd_2O_3$.

Que ce soit des combustibles mixtes (tels que $UO_2$ - $PuO_2$) ou des barres de contrôle (telles que $UO_2$ - $Gd_2O_3$), ces produits peuvent être fabriqués, soit par la précipitation de composés métalliques à partir de solutions de nitrates, soit par la décomposition séparée de nitrates de chacun des composants, suivie d'un mélange des oxydes en résultant, soit plus particulièrement par la décomposition d'un mélange de nitrates des métaux lourds concernés, dopé par du nitrate d'ammonium.

Un premier type de procédé décrit dans le US-A- 4 397 778 ou dans le FR-A- 2 501 061 consiste à précipiter conjointement une solution mixte de nitrates de métaux lourds, tels que l'uranium et le plutonium, au moyen de l'ammoniac, à séparer le co-précipité des eaux mères contenant le nitrate d'ammonium en solution, à le sécher et le calciner, pour obtenir le mélange d'oxydes métalliques pulvérulents dont la granulométrie est plus ou moins maîtrisable
Ce premier type de procédé présente aussi l'inconvénient majeur de générer un effluent radioactif, contenant essentiellement du nitrate d'ammonium en solution, pollué par des métaux lourds, qu'il faut traiter avant son rejet.

Un autre type de procédé, décrit dans le FR-A- 2 526 006, consiste à décomposer séparément les nitrates de métaux lourds, tels que, par exemple, le nitrate de plutonium et le nitrate d'uranyle, à réduire le trioxyde d'uranium en dioxyde, puis à mélanger et broyer finement les oxydes ainsi obtenus, à les pastiller et les fritter.
Mais un tel procédé conduit à l'obtention de pastilles dans lesquelles la distribution des oxydes n'est pas uniforme.

Un autre type de procédé du BE-A- 891 819 consiste à convertir conjointement, par décomposition thermique, à une température comprise entre 300°C et 800°C, en présence de 0,5 à 5 moles de nitrate d'ammonium par mole de métaux lourds (au total), des solutions aqueuses contenant un ou plusieurs nitrates de métaux lourds concentrés, en poudres d'oxydes métalliques se prêtant à une densification par frittage.

Mais un tel procédé procure des désavantages substantiels, dont en particulier l'importante consommation de nitrate d'ammonium et la forte augmentation des effluents gazeux à retraiter.

On connaît d'après le EP-A- 0 328 742 un procédé pour produire un mélange d'oxydes métalliques de combustible nucléaire à partir d'une solution de nitrate comprenant différents éléments ayant divers degrés d'oxydation. Dans une première zone d'un four, la solution est pulvérisée par l'intermédiaire d'une buse à l'aide d'un gaz chauffé à une première température qui permet un séchage très rapide de la solution et au moins en partie une dénitration. La solution pulvérisée passe ensuite dans plusieurs zones de chauffage où elle est successivement évaporée, soumise à une dénitration et à au moins une calcination partielle et séparée.

On connaît d'après le EP-A- 0 143 726 un procédé de dénitration de nitrates métalliques en deux étapes, la première de déshydratation incomplète et la seconde de calcination en présence de vapeur d'eau.

Le DE-A- 38 02 047 décrit un procédé pour séparer un métal radioactif à partir d'une solution aqueuse qui contient du nitrate d'ammonium et/ou du carbonate d'ammonium et/ou le métal sous forme de nitrate ou de carbonate. Cette solution aqueuse est pulvérisée dans un brûleur à vaporisation sous flamme ayant une buse de pulvérisation, est soufflée et décomposée sous l'arrivée d'un gaz combustible et d'un gaz comburant.

C'est pourquoi l'invention poursuit le but, non seulement d'éliminer les inconvénients précités mais de satisfaire d'autres objectifs plus ambitieux.

L'invention a dès lors pour objet :

- un procédé de décomposition thermique de nitrates de métaux lourds, sous forme solide ou d'un mélange en solution aqueuse, en vue de la production directe de poudres de qualité céramique, disposant d'une surface spécifique suffisante pour que ces poudres se prêtent facilement à une conversion en pastilles de combustible nucléaire contenant des oxydes métalliques en mélange ;

- de procurer un mélange pulvérulent d'oxydes métalliques lourds et dans ce mélange de l'$UO_3$ à surface spécifique adaptée aux procédés de production par réduction du trioxyde d'uranium en dioxyde d'uranium ;

- de disposer d'un procédé conduisant à la production d'une poudre d'oxydes métalliques, ayant une surface spécifique au moins égale à $2m^2g^{-1}$ ;

- de fournir des oxydes compatibles avec l'obtention de pastilles céramiques à haute résistance mécanique dans lesquelles la distribution des oxydes métalliques est uniforme ;

- de procurer un procédé applicable aux produits d'une usine de retraitement de combustible nucléaire pour la production de pastilles de combustible mixtes, répondant aux spécifications requises ;

- d'éliminer tout ou partie des opérations de broyage des oxydes, seuls ou en mélange, précédant la réalisation des pastilles de combustible ;

- de supprimer tout ou partie des opérations d'ultrabroyage qui sont habituellement nécessaires pour dissoudre complètement les pastilles rebutées en cours de fabrication, et celles au terme de leur vie en réacteur nucléaire.

Sommaire de l'invention

L'invention concerne un procédé d'obtention d'un mélange pulvérulent d'oxydes métalliques, de réactivité appropriée, appartenant à la filière nucléaire, par décomposition thermique de leurs nitrates se présentant sous forme d'une solution aqueuse ou d'un mélange de solides, pulvérulents ou rendus pulvérulents.

Selon l'invention, le procédé se caractérise en ce qu'on réalise dans une zone de contact d'une chambre de réaction, le contact thermomécanique entre la solution ou le mélange solide et un fluide gazeux introduit simultanément dans la chambre de réaction, ce fluide gazeux étant à une température au moins égale à la température de décomposition des nitrates et possédant une énergie mécanique suffisamment forte pour produire une pulvérisation fine de la solution ou une dispersion fine du mélange solide, et réaliser en instantané la décomposition des nitrates.

Description détaillée de l'invention

Selon le procédé de l'invention, on réalise dans une zone de contact d'une chambre de réaction, un contact thermomécanique entre le mélange des nitrates métalliques constituant une phase dense et un fluide gazeux doté d'une grande énergie mécanique et doté aussi d'une température au moins égale à la température de décomposition des nitrates.

Le mélange de nitrates métalliques constituant la phase dense est généralement introduit selon un axe approprié au niveau de la zone de contact, y est transformé en fine pulvérisation quand le mélange est dans un état liquide, ou en fine dispersion quand le mélange est dans un état solide pulvérulent.

Le fluide gazeux, doté d'une grande énergie mécanique et thermique, est introduit simultanément à la phase dense, dans la zone de contact sous forme d'un écoulement tourbillonnaire symétrique. Cet écoulement tourbillonnaire, coaxial à l'axe principal de la chambre de réaction, a la propriété de transformer le mélange de nitrates métalliques en une dispersion particulièrement affinée de microgouttelettes ou de poudre. Ce mélange est saisi par le fluide gazeux, préalablement porté à une température élevée, selon un contact mécanique brutal et bref, et dès lors soumis à un effet thermique suffisant pour provoquer la décomposition instantanée des nitrates métalliques en un mélange d'oxydes pulvérulents.

La surface spécifique de la poudre d'oxydes métalliques résultant de la dénitration thermique détermine la réactivité de cette poudre à l'égard des transformations physiques ou chimiques ultérieures de la filière nucléaire. Cette surface spécifique dépend des caractéristiques physico-chimiques de ladite poudre et en particulier de sa finesse. Ce phénomène est vérifié dans le cas de la dénitration thermique d'un mélange de nitrates d'uranyle, plutonium, thorium, césium, ruthénium, et de terres rares telles que, par exemple, gadolinium, cérium.
Ainsi, dans le cas, par exemple, de la dénitration thermique d'un mélange de nitrates d'uranyle et d'un autre élément, la réactivité du mélange d'oxydes obtenu dépend à la fois de la surface spécifique de l'un au moins des oxydes d'uranium produits ($UO_3$, $U_3O_8$ et $UO_2$) et de l'oxyde de l'autre élément.
En conséquence, les conditions de fonctionnement du procédé selon l'invention doivent maîtriser la surface spécifique des poudres contenant en mélange l'un au moins des oxydes d'uranium ou de plutonium, associés l'un à l'autre ou associés séparément ou ensemble à l'un au moins des oxydes de thorium, césium, ruthénium, et de terres rares telles que, par exemple, gadolinium, cérium : la surface spécifique du mélange d'oxydes pulvérulents est souhaitablement au moins égale à $2m^2g^{-1}$ et préférentiellement au moins égale à $7m^2g^{-1}$.

Quand le mélange de nitrates métalliques à décomposer est en phase liquide, la concentration en métaux présents dans le mélange est souhaitablement comprise entre 100g/l et 1400 g/l (exprimés en g de métaux par litre de solution).

L'acidité de la phase liquide peut varier dans un large domaine tel que pouvant atteindre environ 8 N : elle n'est pas rédhibitoire pour l'application du procédé selon l'invention.

Quand le mélange de nitrates métalliques à décomposer est une poudre, la concentration en métaux s'exprime sous la forme du rapport molaire :

$$R = \frac{\text{nombre de moles de M}}{\text{nombre total de moles de métaux dans le mélange}}$$

dans lequel M représente l'un des métaux uranium, plutonium, thorium, césium, ruthénium, les terres rares comme le gadolinium, le cérium et R étant compris entre 0 et 1 (bornes exclues).

Dans le cas de la présence simultanée dans le mélange pulvérulent, par exemple :

- de l'uranium et du plutonium, le rapport molaire Pu/(U+Pu) peut varier préférentiellement de 0,02 à 0,80 et très préférentiellement de 0,05 à 0,15 ;

- de l'uranium et du gadolinium, le rapport molaire Gd/(U+Gd) peut varier préférentiellement de 0,01 à 0,20 et très préférentiellement de 0,02 à 0,10;

- de l'uranium et du cérium, le rapport molaire Ce/(U+Ce) peut varier préférentiellement de 0,02 à 0,80 et très préférentiellement de 0,05 à 0,15 ;

- de l'uranium ou du plutonium, associés l'un à l'autre ou encore l'un et/ou l'autre associés à l'un au moins des éléments thorium, césium, ruthénium, et les terres rares dont gadolinium et cérium, chacun de ces derniers éléments cités peut être présent dans le mélange selon de larges limites, soit inhérentes à la composition des matières de recyclage, soit souhaitées pour la réalisation du combustible nucléaire.

Le fluide gazeux mis en oeuvre dans le procédé de l'invention est introduit dans la zone de contact, doté d'une grande énergie thermomécanique : il y est introduit sous la forme d'un écoulement tourbillonnaire symétrique.

Selon une variante préférentielle, l'axe de symétrie de l'écoulement tourbillonnaire du fluide gazeux introduit est confondu, non seulement avec l'axe longitudinal de la chambre de réaction, mais également avec celui du dispositif d'injection de la phase dense.

La chaleur nécessaire à la décomposition du mélange des nitrates métalliques est fournie par le fluide gazeux chaud. Ce fluide gazeux peut être constitué par de l'air, par un gaz inerte tel que l'azote, ou par des gaz résultant de la combustion :

- d'un combustible qui peut être de l'hydrogène ou un hydrocarbure, de préférence gazeux, tels que le méthane, l'éthane, le propane, le butane ;

- en présence d'un comburant choisi dans le groupe constitué par l'air, l'oxygène, ou un mélange des deux.

Le fluide gazeux chaud peut avoir souhaitablement un caractère plus ou moins réducteur, grâce par exemple à la présence d'un gaz réducteur tel que l'hydrogène, l'oxyde de carbone, ou grâce à une combustion incomplète lorsque le gaz chaud résulte de la combustion d'un combustible en présence d'un comburant.

Quand le fluide gazeux à introduire est de l'air ou un gaz inerte, auquel peut être mêlé un gaz réducteur, il peut être porté à la température souhaitée par un dispositif de chauffage indirect, tel que par exemple un chauffage électrique, externe à la chambre de réaction. Mais lorsque le fluide gazeux à introduire résulte de la combustion d'un combustible en présence d'un comburant, il peut être généré dans une chambre de combustion indépendante de la chambre de réaction (chauffage ex situ) ou associé à la chambre de réaction (chauffage in situ).

La température qui doit régner dans la zone de contact et a fortiori dans la chambre de réaction pour permettre la décomposition instantanée du mélange de nitrates métalliques, appelée "température de consigne", se situe dans l'intervalle allant de 250°C à 1000°C et préférentiellement allant de 350°C à 800°C.

La température de consigne agit, soit sur le réglage du moyen de chauffage du fluide gazeux, soit sur le débit d'introduction du mélange des nitrates métalliques à décomposer.

La chambre de réaction dans laquelle s'effectue la décomposition des nitrates métalliques et dans laquelle se trouve la zone de contact où s'établit le contact thermomécanique entre le mélange de nitrates métalliques constituant la phase dense et le fluide gazeux doté d'une grande énergie thermomécanique, peut être choisie parmi celles décrites par exemple dans le brevet français n°2257326, le brevet européen n°0007846, dans le brevet US n°3,041,136 ou encore dans l'article Informations Chimie n° 342-Octobre 1992.

Au cours de la décomposition du mélange de nitrates métalliques, il est obtenu d'une part un mélange d'oxydes métalliques offrant la réactivité souhaitée et d'autre part un flux gazeux que l'on sépare. Le flux gazeux contient les $NO_x$ provenant de la décomposition des nitrates métalliques que l'on récupère ultérieurement en majeure partie sous la forme de $HNO_3$.

Le mélange d'oxydes métalliques obtenus après séparation du flux gazeux peut être soumis à une action de réduction par un agent réducteur :

- en vue d'obtenir, par exemple, un oxyde mixte riche en dioxyde d'uranium ($UO_2$) de réactivité suffisante pour être transformé ultérieurement en $UF_4$ puis $UF_6$ ou uranium métal ;
- ou encore, après un éventuel précompactage, être comprimé, pastillé et fritté en vue d'être utilisé ultérieurement comme combustible nucléaire.

Il a été constaté que le mélange des oxydes mixtes ($UO_2$-$PuO_2$), obtenu selon le procédé de l'invention après réduction ou le produit fritté en résultant, est facilement solubilisé par $HNO_3$.
Cette facile solubilisation est une caractéristique des mélanges d'oxydes métalliques issus du procédé selon l'invention, qui se manifeste en contradiction avec l'état de la technique : il est connu, en effet, que si les composants ($UO_2$ et $PuO_2$) ne sont pas intimement associés au moment de la formation de la pastille, cette pastille, après son usage en réacteur nucléaire, est difficilement solubilisable par $HNO_3$ seul.
C'est pourquoi le procédé de l'invention se manifeste être particulièrement adapté à l'obtention d'un combustible nucléaire sous forme de pastilles, facilement recyclables au terme de leur vie.

Ainsi, il apparaît que le procédé selon l'invention, appliqué au traitement de mélanges de nitrates de métaux lourds, tels que les nitrates d'uranyle, de plutonium, associés l'un à l'autre, ou associés ensemble ou séparément à l'un au moins des nitrates de thorium, césium, ruthénium, de terres rares telles que, par exemple gadolinium, cérium, conduit, dans son objet principal, à l'obtention d'un mélange d'oxydes métalliques ayant une surface spécifique adéquate pour lui conférer une excellente réactivité, mais procure également un mélange d'oxydes métalliques au sein duquel lesdits oxydes sont particulièrement bien dispersés les uns à l'égard des autres, ce qui permet, en particulier, le recyclage des poudres d'oxydes mixtes ou de pastilles présentant des anomalies par rapport aux spécifications.

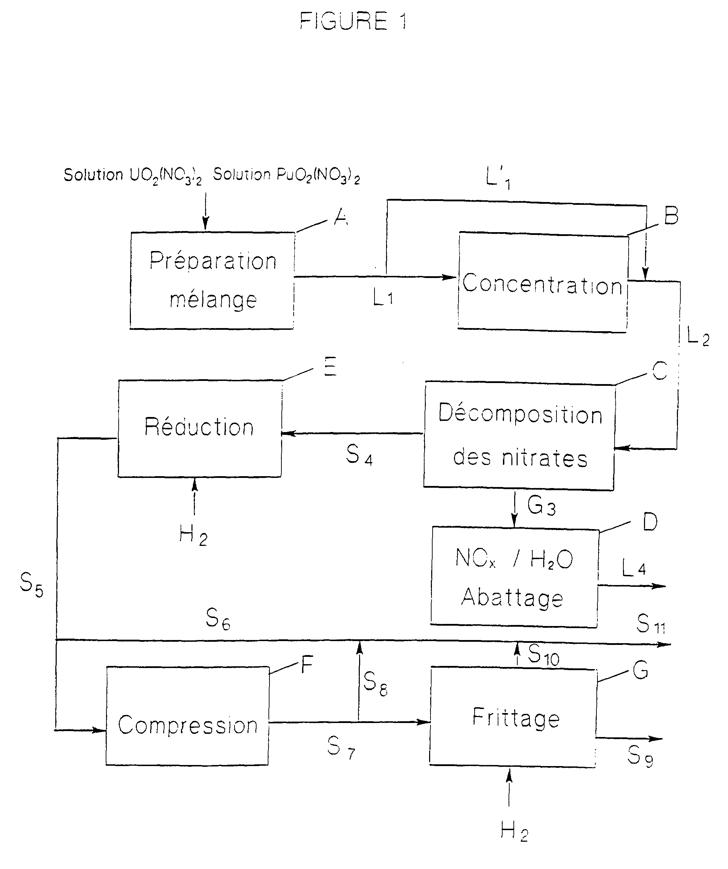

L'invention sera mieux comprise grâce à l'illustration qui en est faite par le schéma à caractère industriel du circuit de fabrication du combustible nucléaire intégrant le procédé selon l'invention (figure 1).
Selon le schéma, un mélange mixte en solution est préparé (en A) par l'apport simultané et en quantités adéquates des nitrates d'uranyle et de plutonium.
Ce mélange intime de nitrates en solution est éventuellement introduit selon L1 dans une zone de concentration (B) en vue d'obtenir le niveau de concentration souhaité.
Généralement, la concentration souhaitée correspond à l'obtention du nitrate d'uranyle hexahydraté fondu dans son eau de cristallisation dans lequel les autres nitrates présents sont en solution ou finement dispersés.

Dans le cas où le niveau de concentration est déjà atteint lors du mélange (en A), ledit mélange est directement conduit par L'1 et L2 dans la zone (C) de décomposition.
Ce mélange est introduit dans la zone de contact de la chambre de réaction et y est transformé en fine pulvérisation par contact intime avec le fluide gazeux doté d'une grande énergie thermomécanique, ledit fluide gazeux étant introduit sous la forme d'un écoulement tourbillonnaire symétrique. La température de consigne de la chambre de réaction est choisie dans l'intervalle de 250°C à 1000°C.
Lors du contact thermomécanique brutal et bref, le mélange de nitrates métalliques transformé en de très fines particules se décompose en générant un flux gazeux (G3) se composant de vapeurs nitreuses $NO_x$ et de vapeur d'eau, et un mélange pulvérulent d'oxydes métalliques (S4) ayant une surface spécifique d'au moins $7 m^2 g^{-1}$ qui lui confère la réactivité recherchée.
Le flux gazeux (G3) est alors conduit dans la zone de traitement (D) (tour d'absorption) où il est traité par une solution $HNO_3$ en recirculation, en générant une solution (L4) concentrée en $HNO_3$, qui peut être utilisée, par exemple, pour des opérations de dissolution.
Le mélange pulvérulent (S4) est alors introduit dans la zone de réduction (E) où il est soumis à réduction au moyen d'un courant d'hydrogène porté à une température comprise entre 600°C et 800°C, de telle sorte que le mélange d'oxydes métalliques précédemment évoqué contienne de l'uranium sous la forme d'$UO_2$ de bonne réactivité.

Après réduction, le mélange d'oxydes métalliques est conduit par (S5) dans la zone de compression (F) où il est transformé en pastilles de densité appropriée.
Les pastilles (S7) sont alors frittées dans la zone de frittage (G) en les maintenant dans un courant d'hydrogène à une température suffisante (environ 1700°C) pendant le temps nécessaire.
Les pastilles frittées (S9) sont alors prêtes à être mises en oeuvre dans les assemblages combustibles utilisés dans les réacteurs nucléaires du type PWR, BWR ou autres.

Le recyclage des rebuts de fabrication, par (S6), (S8), (S10), et enfin (S11), après leur mise en solution, se fait dans des conditions simplifiées.

Comme la demanderesse l'a constaté, le procédé selon l'invention conduit à des pastilles combustibles d'oxydes frittés (S10) qui sont facilement solubles dans l'acide nitrique seul, sans addition d'acide fluorhydrique comme le préconise l'état de la technique.
L'invention sera mieux comprise grâce aux exemples énoncés ci-après à titre seulement illustratif.

Exemple 1

Cet exemple illustre la décomposition d'un mélange de nitrates métalliques en solution, comme celui obtenu à partir d'un combustible irradié par dissolution nitrique, après séparation du plutonium et des produits de fission générés.

Ce mélange est une solution de nitrate d'uranyle accompagnée de césium et de ruthénium, de composition suivante :

- uranium       350 g/l
- césium        25 ppm/U
- ruthénium      5 ppm/U
- $HNO_3$       6 N

Cette solution a été pulvérisée dans une zone de contact d'une chambre de réaction, telle que décrite dans le brevet français n°2257326 par un courant d'azote chauffé électriquement à une température de 1100°C.

La température de consigne régulant le flux gazeux était de 400°C.

Le débit de la solution de nitrates métalliques était de 10 litres/heure.

On a obtenu ainsi un mélange d'oxydes riche en $UO_3$, contenant également des oxydes de césium et ruthénium.

La surface spécifique du mélange d'oxydes était de $10 m^2 g^{-1}$.

Ce mélange pulvérulent d'oxydes a pu être utilisé dans un cycle de préparation de combustibles nucléaires.

Quant à la phase gazeuse résultant de la décomposition thermique des nitrates métalliques, elle a été refroidie et absorbée par une solution aqueuse d'acide nitrique en recirculation.

Exemple 2

Cet exemple concerne la décomposition selon l'invention d'un mélange de nitrates d'uranyle et de gadolinium, se présentant sous la forme d'une solution aqueuse ayant pour composition :

- uranium       400 g/l
- gadolinium      14 g/l
- acidité $H^+(HNO_3)$      0,5 N

Cette solution était pulvérisée sous la forme de fines gouttelettes dans une zone de contact d'une chambre de réaction d'un dispositif de décomposition connu sous le nom de "SPIN FLASH" de la société APV-BAKER (Informations Chimie n°342-Octobre1992).

La température de la phase gazeuse tourbillonnaire qui est de l'air, était de 1000°C.

La température de consigne de la zone de contact était de 450°C.

Le débit de la solution de nitrates métalliques était de 5 l/heure.

On a recueilli, après séparation de la phase gazeuse contenant les $NO_x$, un mélange d'oxydes $UO_3$-$Gd_2O_3$, ayant une granulométrie moyenne voisine de 10 μm.

La surface spécifique du mélange était de $16 m^2 g^{-1}$.

Après réduction sous un courant d'hydrogène, à 700°C, il a été obtenu un mélange pulvérulent d'oxydes $UO_2$-$Gd_2O_3$ ayant une surface spécifique d'environ $6 m^2 g^{-1}$ et possédant une très bonne aptitude au frittage.

Exemple 3

Cet exemple illustre le cas de la décomposition thermique d'un mélange de nitrates métalliques, se présentant, après purification au moyen de tributylphosphate, sous l'aspect d'une poudre composée essentiellement de nitrate d'uranyle. Cette poudre contenait :

- uranium       47,0 % en poids
- césium (environ) 40 ppm par rapport à U+Cs
- césium, rapport molaire $Cs/(U+Cs) = 4.10^{-5}$

Initialement, le mélange de nitrates était en solution aqueuse. Cette solution a été concentrée jusqu'à 1200 g/l en uranium, puis soumise à une opération d'écaillage et broyée jusqu'à l'obtention de la poudre destinée à l'opération de décomposition selon l'invention.

La poudre ainsi obtenue a été introduite au moyen d'un convoyeur à vis dans la zone de contact d'une chambre de réaction, telle que décrite dans le brevet européen n°0007846, dans laquelle les gaz chauds sont produits in situ par la combustion complète de propane.

Les gaz chauds produits, dotés d'une énergie thermomécanique élevée, arrivaient dans la zone de contact simultanément avec la phase solide, sous l'aspect d'un écoulement tourbillonnaire symétrique (coaxialement avec le dispositif d'introduction de la poudre).

Le débit de la poudre introduite était de 18 kg/heure.

La température de consigne de décomposition des nitrates était de 650°C : cette température régulait le débit de propane mis en oeuvre dans la chambre de combustion.

De la chambre de réaction, on a extrait une poudre fine d'oxydes constituée de $U_3O_8$ (80 % en poids), $UO_3$ (environ 20 % en poids) et $Cs_2O$ (40 ppm exprimé en moles de Cs par rapport à U+Cs).

La poudre obtenue manifestait une bonne réactivité : surface spécifique de 10 $m^2g^{-1}$ et était destinée à être utilisée dans un cycle de préparation de combustible nucléaire.

Quant à la phase gazeuse contenant des $NO_x$, elle était refroidie et traitée par une solution aqueuse de $HNO_3$.

Exemple 4

Cet exemple illustre le schéma de fonctionnement de la figure 1.

Selon cette figure, une solution aqueuse de nitrates métalliques obtenue par mélange de nitrates d'uranyle et de plutonium (en A) avait pour composition, après concentration (en B) :

- uranium        1040 g/l
- plutonium        66 g/l
- acidité $HNO_3$        4,0 N
- rapport molaire Pu/(U+Pu) = 0,059

Cette solution concentrée était introduite (en C) dans un dispositif fonctionnant selon le même principe que celui décrit dans l'exemple 3, où elle était soumise à une décomposition thermomécanique, sous les conditions suivantes :

- température de consigne        450°C
- débit de la solution à traiter        1 l/heure

Les gaz résultant de la décomposition étaient traités (en D) dans une tour d'absorption par une solution de $HNO_3$ en recirculation.

La poudre obtenue (en C) était formée de $UO_3$ et $PuO_2$, de surface spécifique élevée (18$m^2g^{-1}$) et était traitée (en E) par un courant d'hydrogène à 650°C, puis était pastillée (en F) et frittée (en G) à 1700°C en présence d'hydrogène.

Les pastilles mixtes de $UO_2$ et $PuO_2$ ainsi obtenues avaient une densité égale à 94,8 % de la densité théorique. Tous les produits hors spécification étaient recyclés par S11.

Exemple 5

Cet exemple illustre le cas de la décomposition de nitrate mixte d'uranium et plutonium en solution, en vue d'obtenir un mélange directement pulvérulent d'$UO_2$-$PuO_2$ au moyen d'une phase gazeuse hautement thermomécanique et réductrice.

Dans ce cas, la solution est la même que celle mise en oeuvre dans l'exemple 4 et ayant pour composition :

- uranium        1040 g/l
- plutonium        66 g/l
- acidité $HNO_3$        4,0 N

Les gaz chauds étaient constitués d'un courant d'azote contenant 4 % d'hydrogène donnant aux gaz une capacité réductrice à l'égard des oxydes d'uranium. Les gaz étaient portés à la température de 1100°C au moyen du système de chauffe utilisé dans l'exemple 1. La chambre de réaction était également la même que celle mise en oeuvre dans ledit exemple.

Le débit de la solution de nitrates à décomposer était de 0,6 l/heure et la température de consigne était de 600°C.

Dans ces conditions de fonctionnement, on obtenait dans la chambre de décomposition un oxyde mixte essentiellement constitué de $UO_2$ et $PuO_2$. Environ 3 % d'uranium étaient sous forme d'$U_3O_8$.

Exemple 6

Cet exemple concerne la décomposition selon l'invention d'un mélange de nitrates d'uranyle et de cérium, se présentant sous la forme d'une solution aqueuse ayant pour composition :

- uranium     1065 g/l
- cérium     70 g/l
- acidité $H^+(HNO_3)$     0,01 N
- rapport molaire Ce/(U+Ce)≅0,1

Cette solution était introduite (en C) dans un dispositif fonctionnant selon le même principe que celui décrit dans l'exemple 3. Elle y était soumise à une décomposition thermomécanique sous les conditions suivantes :

- la température de consigne de la zone de contact était de 700°C ;
- le débit de la solution de nitrates métalliques était de 67 l/heure.

On a recueilli, après séparation de la phase gazeuse contenant les $NO_x$, une poudre d'oxydes ayant les caractéristiques d'une solution solide d'oxydes mixtes U/Ce. Cette poudre avait une granulométrie moyenne voisine de 5 μm et une surface spécifique de 10,9 $m^2g^{-1}$.

Après réduction par l'hydrogène, à 625°C, il a été obtenu une poudre d'oxydes mixtes ayant une surface spécifique d'environ 6 $m^2g^{-1}$. Cette poudre a été pastillée et frittée à 1760°C sous hydrogène.

**Revendications**

1. Procédé d'obtention d'un mélange d'oxydes métalliques pulvérulents, de réactivité appropriée, appartenant à la filière nucléaire, à partir du mélange de leurs nitrates, se présentant sous forme d'une solution aqueuse ou d'un mélange de solides, pulvérulents ou rendus pulvérulents, **caractérisé en ce qu'**on réalise dans une zone de contact d'une chambre de réaction, le contact thermomécanique entre la solution ou le mélange solide dispersé et un fluide gazeux introduits simultanément dans la chambre de réaction, ce fluide gazeux étant à une température au moins égale à la température de décomposition des nitrates et possédant une énergie mécanique suffisamment forte pour produire une pulvérisation fine de la solution ou une dispersion fine du mélange solide, et réaliser en instantané la décomposition des nitrates.

2. Procédé selon la revendication 1, **caractérisé en ce que** le mélange de nitrates métalliques comporte l'un au moins des métaux U ou Pu, associés l'un à l'autre, ou associés, séparément ou ensemble, à l'un au moins des métaux Thorium (Th), Césium (Cs), Ruthénium (Ru), et des terres rares dont Gadolinium (Gd), Cérium (Ce).

3. Procédé selon la revendication 1, **caractérisé en ce que** le mélange de nitrates métalliques, de la filière nucléaire, quand il est en phase liquide, a une concentration en métaux comprise entre 100 g/l et 1400 g/l.

4. Procédé selon l'une quelconque des revendications 1 à 3, **caractérisé en ce que** l'acidité du mélange, quand il se présente en phase liquide, peut atteindre environ 8 N.

5. Procédé selon l'une quelconque des revendications 1 à 2, **caractérisé en ce que**, quand le mélange de nitrates métalliques à décomposer est une poudre, la concentration en mélange s'exprime sous la forme du rapport molaire :

$$R = \frac{\text{nombre de moles M}}{\text{nombre total de moles de métaux dans le mélange}}$$

dans lequel M représente l'un des métaux uranium, plutonium, thorium, césium, ruthénium, et les terres rares dont le gadolinium, le cérium ; R étant compris entre 0 et 1 (bornes exclues).

6. Procédé selon l'une quelconque des revendications 1, 2 et 5, **caractérisé en ce que**, quand le mélange à décomposer contient de l'uranium et du plutonium, sa composition, exprimée par le rapport Pu/(U+Pu) varie préférentiellement de 0,02 à 0,80 et très préférentiellement de 0,05 à 0,15.

**7.** Procédé selon l'une quelconque des revendications 1, 2 et 5, **caractérisé en ce que**, quand le mélange est une poudre contenant de l'uranium et du gadolinium, sa composition exprimée par le rapport Gd/(U+Gd) varie préférentiellement de 0,01 à 0,20 et très préférentiellement de 0,02 à 0,10.

**8.** Procédé selon l'une quelconque des revendications 1,2 et 5, **caractérisé en ce que**, quand le mélange est une poudre contenant de l'uranium et du cérium, sa composition exprimée par le rapport Ce/(U+Ce) varie préférentiellement de 0,02 à 0,80 et très préférentiellement de 0,05 à 0,15.

**9.** Procédé selon l'une quelconque des revendications 1 à 8, **caractérisé en ce que** le fluide gazeux chaud est introduit dans la zone de contact sous la forme d'un écoulement tourbillonnaire symétrique.

**10.** Procédé selon la revendication 9, **caractérisé en ce que** l'axe de symétrie de l'écoulement tourbillonnaire du fluide gazeux introduit est préférentiellement confondu avec l'axe longitudinal de la chambre de réaction et avec l'axe du dispositif d'injection de la phase dense.

**11.** Procédé selon l'une quelconque des revendications 1 à 10, **caractérisé en ce que** le fluide gazeux est constitué par de l'air, ou par un gaz inerte.

**12.** Procédé selon la revendication 11, **caractérisé en ce que** le gaz inerte est de l'azote.

**13.** Procédé selon l'une quelconque des revendications 11 ou 12, **caractérisé en ce que** le fluide gazeux comporte un agent réducteur qui est de l'hydrogène ou de l'oxyde de carbone.

**14.** Procédé selon l'une quelconque des revendications 1 à 13, **caractérisé en ce que** le fluide gazeux est porté à la température souhaitée par un dispositif de chauffage indirect électrique externe à la chambre de réaction.

**15.** Procédé selon l'une quelconque des revendications 1 à 10, **caractérisé en ce que** le fluide gazeux est constitué de gaz de combustion.

**16.** Procédé selon la revendication 15, **caractérisé en ce que** le fluide gazeux résulte de la combustion d'hydrogène ou d'un hydrocarbure en présence d'un comburant.

**17.** Procédé selon l'une quelconque des revendications 15 ou 16, **caractérisé en ce que** l'hydrocarbure est choisi dans le groupe constitué par le méthane, l'éthane, le propane, le butane.

**18.** Procédé selon la revendication 16, **caractérisé en ce que** le comburant est choisi dans le groupe formé par l'air, l'oxygène, un mélange des deux.

**19.** Procédé selon l'une quelconque des revendications 15 à 18, **caractérisé en ce que** le fluide gazeux est rendu réducteur par une combustion incomplète.

**20.** Procédé selon l'une quelconque des revendications 15 à 19, **caractérisé en ce que** le fluide gazeux résultant de la combustion d'un combustible en présence d'un comburant est généré dans une chambre de combustion externe, indépendante de la chambre de réaction.

**21.** Procédé selon l'une quelconque des revendications 15 à 19, **caractérisé en ce que** le fluide gazeux résultant de la combustion d'un combustible en présence d'un comburant est généré dans une chambre de combustion interne, dépendante de la chambre de réaction.

**22.** Procédé selon l'une quelconque des revendications 1 à 21, **caractérisé en ce que** la température de décomposition instantanée, ou température de consigne, se situe dans l'intervalle allant de 250°C à 1000°C et préférentiellement de 350°C à 800°C.

**23.** Procédé selon l'une quelconque des revendications 1 à 22, **caractérisé en ce que** la température de consigne agit sur le réglage du moyen de chauffage du fluide gazeux ou sur le débit d'introduction du mélange de nitrates métalliques à décomposer.

**24.** Procédé selon l'une quelconque des revendications 1 à 23, **caractérisé en ce que** le mélange pulvérulent d'oxydes métalliques contenant l'un au moins des oxydes d'uranium ou de plutonium, associés l'un à l'autre ou associés séparément ou ensemble à l'un au moins des oxydes de thorium, de césium, de ruthénium et de terres rares dont le gadolinium, et le cérium a une surface spécifique au moins égale à 2 $m^2g^{-1}$ et préférentiellement au moins égale à 7 $m^2g^{-1}$.

**25.** Procédé selon la revendication 24, **caractérisé en ce que** le mélange d'oxydes métalliques est soumis à réduction par un agent réducteur.

**26.** Procédé selon l'une quelconque des revendications 1 à 24, **caractérisé en ce que** les $NO_x$, résultant de la décomposition des nitrates métalliques, sont récupérés par transformation en $HNO_3$.

**27.** Application de l'une quelconque des revendications 1 à 26 à la production et au recyclage de combustible nucléaire.

**Claims**

**1.** Process for obtaining a mixture of pulverulent metal oxides, of appropriate reactivity, belonging to the nuclear industry, from the mixture of their nitrates which are in the form of an aqueous solution or of a mixture of solids which are pulverulent or made pulverulent, **characterized in that**, in a contact zone of a reaction chamber, thermomechanical contact is produced between the solution or the dispersed solid mixture and a gaseous fluid introduced simultaneously into the reaction chamber, this gaseous fluid being at a temperature that is at least equal to the decomposition temperature of the nitrates and having a mechanical energy that is sufficiently high to produce a fine pulverization of the solution or a fine dispersion of the solid mixture, and to carry out instantaneously the decomposition of the nitrates.

**2.** Process according to Claim 1, **characterized in that** the mixture of metal nitrates comprises at least one of the metals U or Pu, which are associated with one another or associated, separately or together, with at least one of the metals thorium (Th), caesium (Cs), ruthenium (Ru) and rare earths including gadolinium (Gd) and cerium (Ce).

**3.** Process according to Claim 1, **characterized in that** the mixture of metal nitrates, of the nuclear industry, has a concentration of metals of between 100 g/l and 1400 g/l when it is in liquid phase.

**4.** Process according to any one of Claims 1 to 3, **characterized in that** the acidity of the mixture can reach approximately 8 N when it is in liquid phase.

**5.** Process according to either of Claims 1 to 2, **characterized in that**, when the mixture of metal nitrates to be decomposed is a powder, the mixture concentration is expressed in the form of the molar ratio:

$$R = \frac{\text{number of moles M}}{\text{total number of moles of metals in the mixture}}$$

in which M is one of the metals uranium, plutonium, thorium, caesium, ruthenium and the rare earths including gadolinium and cerium; R being between 0 and 1 (limits excluded).

**6.** Process according to any one of Claims 1, 2 and 5, **characterized in that**, when the mixture to be decomposed contains uranium and plutonium, its composition, expressed by the ratio Pu/(U+Pu) varies preferably from 0.02 to 0.80 and very preferably from 0.05 to 0.15.

**7.** Process according to any one of Claims 1, 2 and 5, **characterized in that**, when the mixture is a powder containing uranium and gadolinium, its composition, expressed by the ratio Gd/(U+Gd), varies preferably from 0.01 to 0.20 and very preferably from 0.02 to 0.10.

**8.** Process according to any one of Claims 1, 2 and 5, **characterized in that**, when the mixture is a powder containing uranium and cerium, its composition, expressed by the ratio Ce/(U+Ce), varies preferably from 0.02 to 0.80 and very preferably from 0.05 to 0.15.

**9.** Process according to any one of Claims 1 to 8, **characterized in that** the hot gaseous fluid is introduced into the contact zone in the form of a symmetrical whirled flow.

10. Process according to Claim 9, **characterized in that** the axis of symmetry of the whirled flow of the gaseous fluid introduced preferably coincides with the lengthwise axis of the reaction chamber and with the axis of the device for injection of the dense phase.

11. Process according to any one of Claims 1 to 10, **characterized in that** the gaseous fluid consists of air or of an inert gas.

12. Process according to Claim 11, **characterized in that** the inert gas is nitrogen.

13. Process according to either of Claims 11 and 12, **characterized in that** the gaseous fluid comprises a reducing agent which is hydrogen or carbon oxide.

14. Process according to any one of Claims 1 to 13, **characterized in that** the gaseous fluid is heated to the desired temperature by an electrical indirect heating device external to the reaction chamber.

15. Process according to any one of Claims 1 to 10, **characterized in that** the gaseous fluid consists of combustion gas.

16. Process according to Claim 15, **characterized in that** the gaseous fluid results from the combustion of hydrogen or of a hydrocarbon in the presence of an oxidant.

17. Process according to either of Claims 15 and 16, **characterized in that** the hydrocarbon is chosen from the group consisting of methane, ethane, propane and butane.

18. Process according to Claim 16, **characterized in that** the oxidant is chosen from the group made up of air, oxygen and a mixture of the two.

19. Process according to any one of Claims 15 to 18, **characterized in that** the gaseous fluid is made reducing by an incomplete combustion.

20. Process according to any one of Claims 15 to 19, **characterized in that** the gaseous fluid resulting from the combustion of a fuel in the presence of an oxidant is generated in an external combustion chamber that is independent on the reaction chamber.

21. Process according to any one of Claims 15 to 19, **characterized in that** the gaseous fluid resulting from the combustion of a fuel in the presence of an oxidant is generated in an internal combustion chamber that is dependent on the reaction chamber.

22. Process according to any one of Claims 1 to 21, **characterized in that** the temperature of instantaneous decomposition, or set temperature, is in the range from 250°C to 1000°C and preferably from 350°C to 800°C.

23. Process according to any one of claims 1 to 22, **characterized in that** the set temperature acts on the regulation of the means of heating of the gaseous fluid or the entry flow rate of the mixture of metal nitrates to be decomposed.

24. Process according to any one of Claims 1 to 23, **characterized in that** the pulverulent mixture of metal oxides containing at least one of the oxides of uranium or of plutonium, which are associated with one another, or associated separately or together with at least one of the oxides of thorium, of caesium, of ruthenium and of rare earths including gadolinium and cerium, has a specific surface at least equal to $2 \text{ m}^2\text{g}^{-1}$ and preferably at least equal to $7 \text{ m}^2\text{g}^{-1}$.

25. Process according to Claim 24, **characterized in that** the mixture of metal oxides is subjected to reduction using a reducing agent.

26. Process according to any one of Claims 1 to 24, **characterized in that** the $NO_x$ resulting from the decomposition of the metal nitrates are recovered by conversion into $HNO_3$.

27. Application of any one of Claims 1 to 26 to the production and to the recycling of nuclear fuel.

**Patentansprüche**

1. Verfahren zur Herstellung eines feinpulvrigen Gemisches aus Metalloxiden, von angemessener Reaktivität, zu der Nuklearkette gehörend, aus der Mischung ihrer Nitrate, die Form einer wässrigen Lösung oder eines Gemisches feinpulvriger oder feinpulvrig gemachter Festkörper aufweisend,
**dadurch gekennzeichnet,**
**dass** man in einer Kontaktzone einer Reaktionskammer den thermomechanischen Kontakt herstellt zwischen der Lösung oder dem fein zerstreuten Festkörpergemisch und einem gasförmigen Fluid, simultan in die Reaktionskammer eingeführt, wobei dieses gasförmige Fluid eine Temperatur wenigstens gleich der Zerlegungstemperatur der Nitrate aufweist und eine mechanische Energie besitzt, die ausreichend groß ist, um eine feine Zerstäubung der Lösung oder eine feine Zerstreuung des Festkörpergemisches zu erzeugen und die Momentanzerlegung der Nitrate zu bewirken.

2. Verfahren nach Anspruch 1, **dadurch gekennzeichnet, dass** die Metallnitrate-Mischung wenigstens eines der Metalle U oder Pu enthält, miteinander verbunden, oder getrennt oder zusammen verbunden mit wenigstens einem der Metalle Thorium (Th), Cäsium (Cs), Ruthenium (Ru) und den Seltenerden, darunter Gadolinium (Gd), Cerium (Ce).

3. Verfahren nach Anspruch 1, **dadurch gekennzeichnet, dass** die Mischung aus Metallnitraten der Nuklearkette, wenn sie sich in der Flüssigphase befindet, eine Metall-Konzentration zwischen 100 g/l und 1400 g/l aufweist.

4. Verfahren nach einem der Ansprüche 1 bis 3, **dadurch gekennzeichnet, dass** die Acidität der Mischung, wenn sie sich in der Flüssigphase befindet, ungefähr 8 N erreichen kann.

5. Verfahren nach einem der Ansprüche 1 bis 2, **dadurch gekennzeichnet, dass** wenn die zu zerlegende Metallnitrate-Mischung ein Pulver ist, wird die Mischungskonzentration in der Form des molaren Verhältnisses ausgedrückt:

$$R = \frac{\text{Zahl der Mole M}}{\text{Gesamtzahl der Mole der Metalle in der Mischung}}$$

in dem M eines der Metalle Uran, Plutonium, Thorium, Cäsium, Ruthenium und die Seltenerden, darunter Gadolinium, Cerium darstellt; R ist enthalten zwischen 0 und 1 (Grenzwerte ausgeschlossen).

6. Verfahren nach einem der Ansprüche 1, 2 und 5, **dadurch gekennzeichnet, dass** - wenn die zu zerlegende Mischung Uran und Plutonium enthält -, ihre Zusammensetzung, ausgedrückt durch das Verhältnis Pu/(U+Pu) bevorzugt von 0,02 bis 0,80 und sehr bevorzugt von 0,05 bis 0,15 variiert.

7. Verfahren nach einem der Ansprüche 1, 2 und 5, **dadurch gekennzeichnet, dass** - wenn die zu zerlegende Mischung ein Uran und Gadolinium enthaltender Pulver ist -, ihre Zusammensetzung, ausgedrückt durch das Verhältnis Gd/(U-Gd) bevorzugt zwischen 0,01 bis 0,20 und sehr bevorzugt von 0,02 bis 0,10 variiert.

8. Verfahren nach einem der Ansprüche 1, 2 und 5, **dadurch gekennzeichnet, dass** - wenn die zu zerlegende Mischung ein Uran und Cerium enthaltender Pulver ist -, ihre Zusammensetzung, ausgedrückt durch das Verhältnis Ce/(U-Ce) bevorzugt zwischen 0,02 bis 0,80 und sehr bevorzugt von 0,05 bis 0,15 variiert.

9. Verfahren nach einem der Ansprüche 1 bis 8, **dadurch gekennzeichnet, dass** das heiße gasförmige Fluid in Form eines symmetrischen Wirbelstroms in die Kontaktzone hineingeblasen wird.

10. Verfahren nach Anspruch 9, **dadurch gekennzeichnet, dass** die Symmetrieachse des hineingeblasenen gasförmigen Fluid-Wirbelstroms vorzugsweise zusammenfällt mit der Längsachse der Reaktionskammer und mit der Achse der Einspritzvorrichtung der dichten Phase.

11. Verfahren nach einem der Ansprüche 1 bis 10, **dadurch gekennzeichnet, dass** das gasförmige Fluid durch Luft oder durch ein Inertgas gebildet wird.

12. Verfahren nach Anspruch 11, **dadurch gekennzeichnet, dass** das Inertgas Stickstoff ist.

13. Verfahren nach einem der Ansprüche 11 oder 12, **dadurch gekennzeichnet, dass** das gasförmige Fluid ein Reduktionsmittel enthält, das Wasserstoff oder Kohlenmonoxid ist.

14. Verfahren nach einem der Ansprüche 1 bis 13, **dadurch gekennzeichnet, dass** das gasförmige Fluid durch eine indirekte, außerhalb der Reaktionskammer angeordnete elektrische Heizvorrichtung auf die gewünschte Temperatur gebracht wird.

15. Verfahren nach einem der Ansprüche 1 bis 10, **dadurch gekennzeichnet, dass** das gasförmige Fluid durch Verbrennungsgas gebildet wird.

16. Verfahren nach Anspruch 15, **dadurch gekennzeichnet, dass** das gasförmige Fluid aus der Verbrennung von Wasserstoff und einem Kohlenwasserstoff in Anwesenheit eines Sauerstoffträgers resultiert.

17. Verfahren nach einem der Ansprüche 15 oder 16, **dadurch gekennzeichnet, dass** der Kohlenwasserstoff aus der durch Methan, Ethan, Propan und Butan gebildeten Gruppe gewählt wird.

18. Verfahren nach Anspruch 16, **dadurch gekennzeichnet, dass** der Sauerstoffträger aus der Gruppe gewählt wird, die durch Luft, Sauerstoff und einer Mischung der beiden gebildet wird.

19. Verfahren nach einem der Ansprüche 15 bis 18, **dadurch gekennzeichnet, dass** das gasförmige Fluid durch eine unvollständige Verbrennung reduzierend gemacht ist.

20. Verfahren nach einem der Ansprüche 15 bis 19, **dadurch gekennzeichnet, dass** das aus der Verbrennung eines Brennstoffs in Anwesenheit eines Sauerstoffträgers resultierende gasförmige Fluid in einer externen, von der Reaktionskammer unabhängigen Verbrennungskammer erzeugt wird.

21. Verfahren nach einem der Ansprüche 15 bis 19, **dadurch gekennzeichnet, dass** das aus der Verbrennung eines Brennstoffs in Anwesenheit eines Sauerstoffträgers resultierende gasförmige Fluid in einer internen, von der Reaktionskammer abhängigen Verbrennungskammer erzeugt wird.

22. Verfahren nach einem der Ansprüche 1 bis 21, **dadurch gekennzeichnet, dass** die Momentanzerlegungstemperatur, oder Solltemperatur, sich in dem Intervall von 250°C bis 1000°C und vorzugsweise von 350°C bis 800°C befindet.

23. Verfahren nach einem der Ansprüche 1 bis 22, **dadurch gekennzeichnet, dass** die Solltemperatur auf die Regelung der Heizeinrichtungen des gasförmigen Fluids oder auf die Einführungsmenge der Mischung aus zu zerlegenden Metallnitraten einwirkt.

24. Verfahren nach einem der Ansprüche 1 bis 23, **dadurch gekennzeichnet, dass** die feinpulvrige Metalloxide-Mischung, die wenigstens eines der Oxide des Urans oder des Plutoniums enthält, die miteinander verbunden sind, oder getrennt oder zusammen verbunden sind mit wenigstens einem der Oxide des Thoriums, des Cäsiums, des Rutheniums und der Seltenerden, darunter das Gadolinium und das Cerium, eine spezifische Oberfläche von wenigstens gleich 2 $m^2g^{-1}$ und vorzugsweise wenigstens gleich 7 $m^2g^{-1}$ hat.

25. Verfahren nach Anspruch 24, **dadurch gekennzeichnet, dass** die Metalloxide-Mischung einer Reduktion durch ein Reduktionsmittel unterzogen wird.

26. Verfahren nach einem der Ansprüche 1 bis 24, **dadurch gekennzeichnet, dass** die $NO_x$, resultierend aus der Zerlegung der Metallnitrate, zurückgewonnen werden durch Umwandlung in $HNO_3$.

27. Anwendung eines der Ansprüche 1 bis 26 zum Herstellen und Recyceln von nuklearem Brennst

# FIGURE 1